# EUROPÄISCHE PATENTSCHRIFT

(11) **EP 3 266 054 B1**
(45) Veröffentlichungstag und Bekanntmachung des Hinweises auf die Patenterteilung: **08.05.2019**
(21) Anmeldenummer: 16707470.7
(22) Anmeldetag: 03.03.2016
(51) Int. Cl.: H01M 2/10, H01M 10/653, H01M 10/613, H01M 2/20

(54) **AKKUPACK FÜR EINE HANDWERKZEUGMASCHINE**
BATTERY PACK FOR A POWER TOOL
BLOC-BATTERIE POUR OUTIL ÉLECTRIQUE

(30) Priorität: 06.03.2015 DE 102015204055; 23.09.2015 DE 102015218261; 02.03.2016 DE 102016203424
(43) Veröffentlichungstag der Anmeldung: 10.01.2018
(73) Patentinhaber: Robert Bosch GmbH, 70442 Stuttgart (DE)
(72) Erfinder: REJMAN, Marcin, 71334 Waiblingen (DE); SEIDEL, Thorsten, 71686 Remseck (DE)
(86) Internationale Anmeldenummer: PCT/EP2016/054506
(87) Internationale Veröffentlichungsnummer: WO 2016/142256

(56) Entgegenhaltungen:
- FR-A1- 2 990 062
- US-A1- 2003 017 383
- US-A1- 2009 004 555
- US-A1- 2014 272 517

## Beschreibung

Die vorliegende Erfindung betrifft einen Akkupack für eine Handwerkzeugmaschine nach Anspruch 1.

Elektrische Handwerkzeugmaschinen, wie zum Beispiel Schlagschrauber, Bohrmaschinen, Winkelschleifer, Stichsägen, Kreissägen oder Hobelmaschinen für den Handwerker- oder Heimwerkerbedarf weisen als Antriebsmotor gewöhnlich entweder einen Wechselstrommotor oder einen Gleichstrommotor auf. Während der erstere in der Regel über ein Netzkabel mit Wechselstrom aus dem Netz gespeist wird, stammt die elektrische Energie zur Versorgung des Gleichstrommotors in der Regel aus einem sogenannten Akkupack, einem wiederaufladbaren Akkumulator in einem mit dem Gehäuse der Handwerkzeugmaschine kuppelbaren Gehäuse, der beim Kuppeln der beiden Gehäuse elektrisch an die Stromzufuhrleitungen des Gleichstrommotors angeschlossen wird.

Derartige Akkupacks sind grundsätzlich bekannt und weisen wiederaufladbare Akkumulatoren, in der Regel eine Mehrzahl von in Parallel- und/oder Reihenschaltung verbundener Akkuzellen auf. Im Zuge dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann und für den Betrieb der Handwerkzeugmaschine die Energie liefert und austauschbar in einer Kammer, einer Schnittstelle oder dergleichen der Handwerkzeugmaschine aufgenommen ist. Das Zuordnen des Akkupacks zur Handwerkzeugmaschine erfolgt durch Einstecken beziehungsweise Einschieben des Akkupacks in eine komplementäre Einsteckbuchse des Gerätegehäuses, wobei der Akkupack mit dem Gerätegehäuse der Handwerkzeugmaschine derart koppelbar ist, dass beim Koppeln der beiden Gehäuse das Elektrowerkzeug elektrisch an den Akkupack angekoppelt und mechanisch verriegelt wird. Die elektrische Kontaktierung erfolgt zumeist im Bereich der Verriegelungsvorrichtung.

Bei den Akkupacks erweist es sich als nachteilig, dass in jeder Akkuzelle sowohl bei der Stromabgabe als auch bei der Stromaufnahme Verlustwärme anfällt, die zu einer erhöhten Temperatur des gesamten Akkublocks führen kann. Um Schädigungen der Akkuzelle und/oder des Akkublocks zu vermeiden, muss einerseits Verlustwärme sicher abgeführt werden und andererseits bei zu niedrigen Außentemperaturen eine Temperierung des Akkupacks möglich sein, was insbesondere bei chemisch auf Lithium basierenden Zellen von Vorteil ist.

Akkupacks für Handwerkzeugmaschinen umfassen einen Zellenhalter und mindestens eine Akkuzelle, wobei der Zellenhalter die mindestens eine Akkuzelle aufnimmt. Die Akkuzelle weist eine zu einer Längsachse x parallel verlaufende Mantelfläche auf, wobei die Mantelfläche von zwei senkrecht zu der Längsachse x stehenden Stirnflächen begrenzt wird, an denen sich die elektrischen Pole der Akkuzelle befinden. Zwischen wenigstens einer Stirnfläche der Akkuzelle und einer im Wesentlichen parallel zu der Stirnfläche der Akkuzelle verlaufenden Wandung des Akkupackgehäuses ist wenigstens eine elastische, wärmeleitende Einlage angeordnet, wobei die elastische, wärmeleitende Einlage in thermischem Kontakt mit der Stirnfläche der Akkuzelle steht und Wärme von der Akkuzelle in Richtung der Wandung des Akkupackgehäuses abführt. Derartige Akkupacks sind beispielsweise bekannt aus der FR 2 990 062 A1 oder der US 2014/272517 A1.

Ferner weisen derartige Akkupacks Gehäuse auf, welche zum Großteil aus Kunststoffmaterialien bestehen. Üblicherweise für Akkupackgehäuse verwendete Kunststoffmaterialien umfassen Acrylnitril-Butadien-Styrol (ABS), Polycarbonat (PC) oder Polyamid (PA). Diese Kunststoffmaterialien weisen gute mechanische Eigenschaften und eine ausreichende Wärmeleitfähigkeit auf, die sie für einen Einsatz als Akkupackgehäuse für die meisten gegenwärtig im Handel befindlichen Akkuzellen, beispielsweise Lithium-Ionen Zellen, geeignet macht. Diese Weisen jedoch den Nachteil auf, dass sie eine gute wärmeisolierende Wirkung haben. Dies ist in einem Akkupack unerwünscht, da die im Betrieb oder beim Laden des Akkupacks entstehende Wärme möglichst rasch abgeführt werden soll.

Des Weiteren geht die Entwicklung von neueren Akkuzellen in Richtung einer Vergrößerung des Leistungsumsatzes, wodurch auch die Verlustleistung größer wird, so dass im Inneren des Gehäuses mehr Wärme freigesetzt wird und schneller an die Umgebung abgeführt werden muss, um eine Überhitzung der Batteriezellen zu vermeiden.

Hinzu kommt, dass Immer mehr Akkupackgehäuse weitestgehend dicht verschlossen ausgeführt werden, um ein Eindringen von Feuchtigkeit zu verhindern, so dass die Wärmeabfuhr durch die Gehäusewand hindurch erfolgen muss.

### Offenbarung der Erfindung

Aufgabe der Erfindung ist es, die oben genannten Nachteile zu verbessern und einen Akkupack für eine Handwerkzeugmaschine mit einer optimierten Abfuhr der anfallenden Verlustwärme bereitzustellen. Dabei soll der Akkupack eine gute Ergonomie und Montierbarkeit aufweisen, kostengünstig und einfach aufgebaut sein.

Diese Aufgabe wird durch einen Akkupack gemäß Anspruch 1 gelöst. Vorteilhafte Ausgestaltungen, Varianten und Weiterbildungen der Erfindung sind den Unteransprüchen zu entnehmen.

Erfindungsmäß ist vorgesehen, dass im Bereich der wenigstens einen Stirnfläche der wenigstens einen Akkuzelle wenigstens ein Wärmespreizelement zwischen der wenigstens einen elastischen wärmeleitenden Einlage und der Wandung des Akkupackgehäuses angeordnet ist, und wobei das Wärmespreizelement in thermischem Kontakt mit der elastischen, wärmeleitenden Einlage und mit der Wandung des Akkupackgehäuses steht und für eine gleichmäßige Beaufschlagung der Wandung des Akkupackgehäuses mit Wärme sorgt.

Es hat sich als Vorteil herausgestellt, die wenigstens eine wärmeleitende Einlage zumindest teilweise aus einem wärmeleitenden Material, das zumindest einer der Materialgruppen der Elastomere, der thermoplastischen Elastomere oder der Kohlefasern angehört, herzustellen. Die Kunststoffmaterialien wie Acrylnitril-Butadien-Styrol (ABS), Polycarbonat (PC) oder Polyamid (PA), wie zum Beispiel PA6 oder PA12 weisen in der Regel gute mechanische Eigenschaften und eine ausreichende Wärmeleitfähigkeit von 0,17 W/mK (ABS), 0,21 W/mK (PC) und 0,29 W/mK (PA6) auf, wodurch sie für einen Einsatz als Akkupackgehäuse für die meisten gegenwärtig im Handel befindlichen Akkuzellen geeignet sind. Erfindungsgemäß ist vorgesehen, dass die wärmeleitende Einlage eine Wärmeleitfähigkeit von größer als 0,15 W/mK, bevorzugterweise größer als 0,20 W/mK, besonders bevorzugterweise zwischen 0,20 W/mK und 0,50 W/mK aufweist. Weist die wärmeleitende Einlage eine Wandstärke von kleiner 1mm auf kann die Wärmeleitfähigkeit auch kleiner als 0,15 W/mK, vorzugsweise bei genau 0,15 W/mK liegen. Bevorzugterweise weist die wärmeleitende Einlage eine Shore-Härte von kleiner als 50 Shore A, bevorzugterweise zwischen 20 Shore A und 45 Shore A auf.

In einer vorteilhaften Ausgestaltung der Erfindung ist vorgesehen, dass das Wärmespreizelement zumindest teilweise aus einem Metall, vorzugsweise aus einer Aluminium- oder Magnesiumlegierung, oder aus einem wärmeleitenden Kunststoff besteht. Vorteilhafterweise ist das Wärmespreizelement ein flächenhaftes Bauteil mit einer Länge L, einer Breite B und einer Dicke D ist, wobei die Dicke D klein gegenüber der Länge L und der Breite B; wobei das Wärmespreizelement über seine Fläche verteilt eine Mehrzahl von Aussparungen aufweist. Auf diese Weise kann die abzuführende Wärme besonders vorteilhaft über das Akkupackgehäuse verteilt abgeführt werden.

In einer bevorzugten Ausführungsform ist das Wärmespreizelement als Metallfolie mit einer Dicke zwischen 0,1mm und 0,5mm; bevorzugterweise zwischen 0,01mm und 0,3mm; oder als Graphitschicht mit einer Dicke zwischen 0,1mm und 0,5mm, bevorzugterweise zwischen 0,01mm und 0,1mm ausgebildet ist.

Entsprechend ist es besonders vorteilhafte, wenn die wärmeleitende Einlage als elastische Folie mit einer Dicke zwischen 0,1mm und 1,4mm; bevorzugterweise zwischen 0,2mm und 1,2mm; besonders bevorzugterweise zwischen 0,3mm und 1,0mm ausgebildet ist. Das ist insbesondere dann von Vorteil, wenn die wärmeleitende Einlage und das Wärmespreizelement als Verbundbauteil, insbesondere als Folienverbundbauteil ausgebildet sind.

Vorteilhafterweise bildet der Zellenhalter zumindest bereichsweise eine Außenseite der ersten Gehäusekomponente und/oder der zweiten Gehäusekomponente des Akkupackgehäuse, wobei in einer besonders bevorzugten Ausführungsform der Zellenhalter die zweite Gehäusekomponente vollständig ausbildet. Dabei weist das Akkupackgehäuse bevorzugterweise wenigstens zwei Seitenkomponenten auf, wobei die Seitenkomponenten im zusammengebauten Zustand des Akkupacks die erste Gehäusekomponente und die zweite Gehäusekomponente derart zusammen halten, dass ein Ablösen der ersten Gehäusekomponente von der zweiten Gehäusekomponente , oder umgekehrt, verhindert wird.

Dabei ist es denkbar, dass die Seitenkomponenten zumindest teilweise aus einem Metall, vorzugsweise aus einem Aluminium- oder Magnesiumdruckguss bestehen, wobei in diesem Fall ein eine zuverlässige Isolationseinlage zwischen den Akkuzellen und den Seitenkomponenten verwendet werden muss, wobei als Isolationseinlagen beispielsweise die elastische, wärmeleitende Einlage verwendet werden kann.

Vorteilhafterweise nimmt der Zellenhalter zwei oder mehr Akkuzellen auf, die durch zumindest einen Zellverbinder in Parallel- und/oder Serienschaltung verbunden sind, wobei der zumindest eine Zellverbinder zwischen einer Stirnfläche der Akkuzellen und der elastischen, wärmeleitenden Einlage angeordnet ist.

Vorteilhafterweise verbindet der zumindest eine Zellverbinder wenigstens zwei oder mehr Akkuzellen, vorzugsweise vier Akkuzellen und insbesondere bevorzugt sechs Akkuzellen miteinander. Dabei ist der Zellverbinder in einer bevorzugten Ausführungsvariante derart großflächig ausgeführt, dass der Zellverbinder im Wesentlichen die Stirnflächen der miteinander verbundenen Akkuzellen abdeckt und auf diese Weise die Funktion des Wärmespreizelementes übernimmt. Dabei ist denkbar, dass das Wärmespreizelement und der Zellverbinder als Verbundbauteil, insbesondere als einstückiges Verbundbauteil ausgebildet sind. In Bereichen, in denen der Wärmeübergang unerwünscht ist und möglichst weitgehend unterbunden werden soll, weist der Zellverbinder schlitzförmige Aussparungen auf, so dass die von den Akkuzellen punktuell auf die Zellverbinder übertragene Verlustwärme auf die gesamte Fläche verteilt und an das elastische Element und/oder die Seitenkomponenten übertragen werden kann, wobei in einer besonders vorteilhaften Ausgestaltung die elastische, wärmeleitende Einlage zumindest bereichsweise in einem direkten thermischen Kontakt mit den Zellverbindern steht.

Der erfindungsgemäße Akkupack kann mit einer Handwerkzeugmaschine lösbar verbunden sein. Dementsprechend bildet eine Handwerkzeugmaschine, sofern sie mit einem erfindungsgemäßen Akkupack verbunden ist, einen weiteren Gegenstand der Erfindung. Der in der Handwerkzeugmaschine eingesetzte Akkupack dient dabei dem Antrieb der Handwerkzeugmaschine.

Grundsätzlich können als Akkuzellen insbesondere Lithiumionenzellen verwendet werden, da es insbesondere bei Lithiumionenzellen möglich ist, mehrere Ackuzellen zu Akkuzellenblöcken zusammenzufassen, in denen mehrere Akkuzellen in einer Parallelschaltung verbunden sind. Dabei ist es besonders vorteilhaft, dass der Zellenhalter Akkuzellen mit verschiedenen Durchmessern und Längen aufnehmen kann, wodurch die Anwendung des Zellenhalters bzw. des Zellenträger in unterschiedlichen Akkupacks erreicht werden kann.

Generell werden unter einer Handwerkzeugmaschine im Rahmen der Anmeldung sämtliche Handwerkzeugmaschinen mit einem in Rotation oder Translation versetzbaren Werkzeugträger, der direkt, über ein Getriebe oder über ein Planetengetriebe von einem Antriebsmotor antreibbar ist, wie beispielsweise Stabschrauber, Akku-Bohrer, Schlagbohrmaschinen, Multifunktionswerkzeuge, Sägen, Scheren, Schleifer und/ oder Bohrschrauber verstanden. Als Übertragung elektrischer Energie soll in diesem Zusammenhang insbesondere verstanden werden, dass die Handwerkzeugmaschine über den Akkupack mit Energie versorgt wird.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:
- Fig. 1: beispielhaft eine Ansicht einer Handwerkzeugmaschine mit einem erfindungsgemäßen Akkupack;
- Fig. 2: eine perspektivische Darstellung eines erfindungsgemäßen Akkupacks;
- Fig. 3: eine Draufsicht auf den Akkupack aus Figur 2;
- Fig. 4: eine perspektivische Explosionsdarstellung einer ersten Variante eines erfindungsgemäßen Akkupacks;
- Fig. 5: eine Schnittansicht des Akkupacks aus Fig. 4;
- Fig. 6: eine perspektivische Explosionsdarstellung einer zweiten Variante eines erfindungsgemäßen Akkupacks;
- Fig. 7: eine Schnittansicht des Akkupack aus Figur 6;
- Fig. 8: eine Detailansicht des Bereiches A aus Figur 7 mit der zweiten Variante des erfindungsgemäßen Akkupacks;
- Fig. 9: eine Detailansicht einer dritten Variante des erfindungsgemäßen Akkupacks;
- Fig. 10: eine perspektivische Darstellung eines Zellhalters mit einer daran angeordneten Akkupackelektronik; und
- Fig. 11: eine perspektivische Detailansicht eines Ausschnitts aus Figur 10.

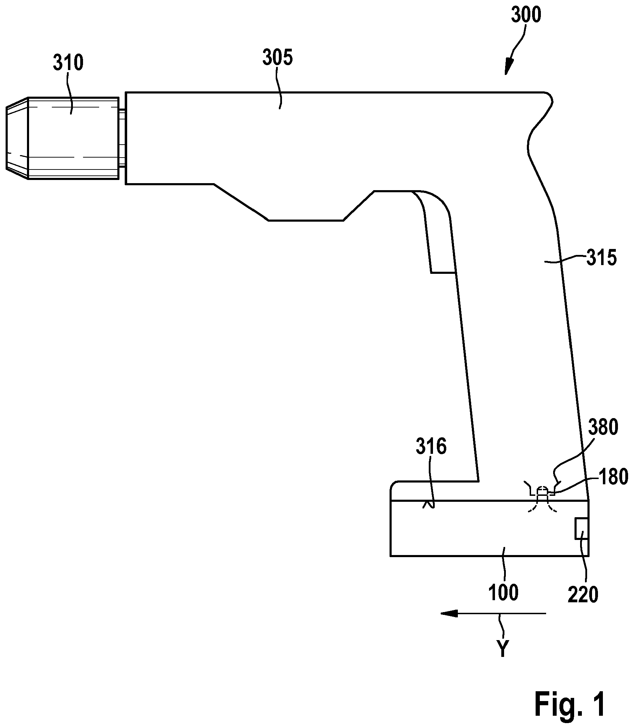

Die Figur 1 zeigt ein als Handwerkzeugmaschine 300 ausgebildetes Elektrogerät. Gemäß der dargestellten Ausführungsform ist die Handwerkzeugmaschine 300 zur netzunabhängigen Stromversorgung mechanisch und elektrisch mit dem Ackupack 100 verbindbar. In Fig. 1 ist die Handwerkzeugmaschine 300 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, welche mit einem Akkupack 100 betrieben werden. Die Handwerkzeugmaschine 300 weist einen Grundkörper 305, an welchem eine Werkzeugaufnahme 320 befestigt ist, sowie einen Handgriff 315 mit einer Schnittstelle 380 auf, an welchem eine korrespondierende Schnittstelle 180 eines erfindungsgemäßen Akkupacks 100, hier in verriegelter Stellung angeordnet ist. Der Akkupack 100 ist als Schiebeakkupack ausgebildet.

Beim Anbringen des Akkupacks 100 an der Handwerkzeugmaschine 300 werden an der Handwerkzeugmaschine 300 vorgesehene Aufnahmemittel, z. B. Führungsnuten und Führungsrippen mit korrespondierenden Führungselementen 110 des Akkupacks 100 in Eingriff gebracht, wobei der Akkupack 100 in einer Schieberichtung y entlang der Aufnahmemittel des Handgriffs 315 eingeführt wird, und wobei der Akkupack 100 entlang einer unteren, im Wesentlichen senkrecht zur Längsrichtung des Handgriffs 315 ausgerichteten Außenfläche 316 des Handgriffs 315 in die Akkupackaufnahme einer Handwerkzeugmaschine 300 geschoben wird. In der in der Figur 1 gezeigten Position ist der Akkupack 100 an dem Handgriff 315 der Handwerkzeugmaschine 300 befestigt und durch Verriegelungsmittel verriegelt. Die Verriegelungsmittel umfassen unter anderem ein Verriegelungselement und ein Betätigungselement 220. Durch Betätigung des Betätigungsmittels 220 kann der Akkupack 100 von dem Handgriff 315 der Handwerkzeugmaschine 300 gelöst werden.

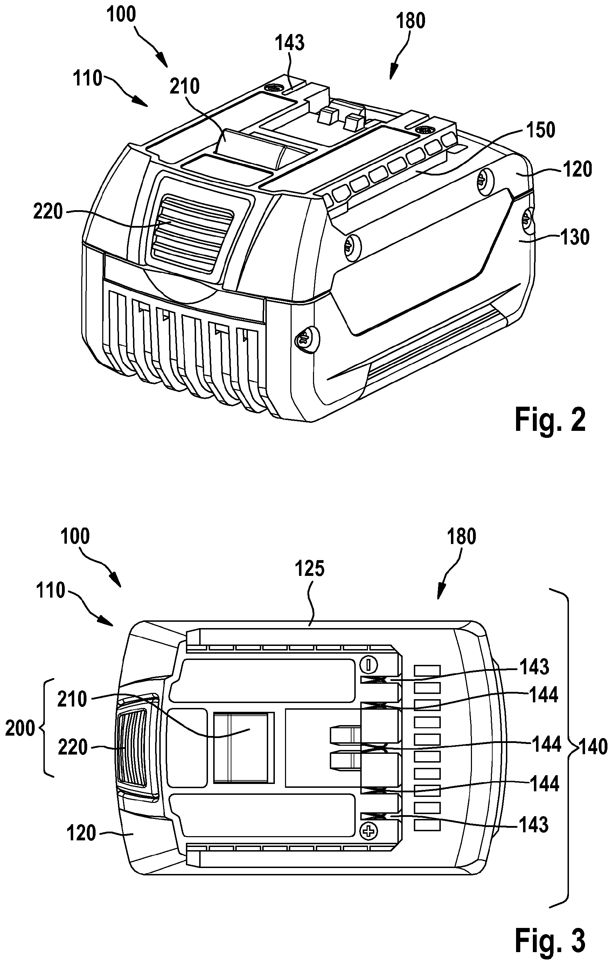

Die Figuren 2 bis 5 zeigen einen erfindungsgemäßen Akkupack 100 für eine Handwerkzeugmaschine 300. Dieser weist ein Gehäuse 110 aus einer ersten Gehäusekomponente 120 und einer zweiten Gehäusekomponente 130 auf, wobei das Gehäuse zwischen der ersten Gehäusekomponente 120 und der zweiten Gehäusekomponente 130 zumindest eine, vorzugsweise und hier dargestellt eine Mehrzahl parallel oder seriell verschaltete Akkuzellen 400 aufnimmt. Die Ackuzellen 400 werden bevorzugterweise entweder mittels eines Zellhalters 600 oder mittels Papphülsen zur Isolation der Akkuzellen 400 untereinander zwischen den beiden Gehäusekomponenten 120, 130 positioniert. Der Akkupack 100 ist in der dargestellten Ausführungsvariante als Schiebeakkupack ausgebildet.

Zum lösbaren Anbringen des Akkupacks 100 an einer Handwerkzeugmaschine 300 oder an einem Ladegerät weist der Akkupack 100 eine Schnittstelle 180 zur lösbaren mechanischen und elektrischen Verbindung mit einer korrespondierenden Schnittstelle 380 der Handwerkzeugmaschine 300 oder einer korrespondierende Schnittstelle des Ladegerätes auf. Beim Anbringen des Akkupacks 100 werden Aufnahmemittel, z. B. Führungsnuten und Führungsrippen, der Handwerkzeugmaschine 300 oder des Ladegerätes zur Aufnahme der korrespondierenden Führungselemente des Akkupacks 100 mit diesen in Eingriff gebracht, wobei der Akkupack 100 in einer Kontaktierungsrichtung y entlang der Aufnahmemittel eingeführt und die Schnittstelle 180 des Akkupacks 100 in die korrespondierende Schnittstelle 380 der Handwerkzeugmaschine 300 oder die korrespondierende Schnittstelle des Ladegerätes geschoben wird. Über die Schnittstellen 180, 380 kann der Akkupack 100 der Handwerkzeugmaschine 300 und/oder dem Ladegerät zugeordnet werden.

Zum Verriegeln des Akkupacks 100 am Handgriff 315 wird der Akkupack 100 in einer Schieberichtung y entlang des Handgriffs 315 geschoben, und zwar entlang einer unteren, im Wesentlichen senkrecht zur Längsrichtung des Handgriffs 315 ausgerichteten Außenfläche des Handgriffs 315. In der in der Figur 1 gezeigten Position ist der Akkupack 100 durch Verriegelungsmittel 200 am Handgriff 315 verriegelt. Die Verriegelungsmittel 200 umfassen unter anderem ein nur schematisch angedeutetes Verriegelungselement 210 und ein Betätigungselement 220. Durch Betätigung des Betätigungsmittels 220 kann der Akkupack 100 von dem Handgriff 315 der Handwerkzeugmaschine 300 gelöst werden. Nach Entriegelung des Akkupacks 100 kann dieser vom Handgriff 315 getrennt werden, und zwar durch ein Schieben des Akkupacks 100 entgegen der Schieberichtung y entlang einer unteren Fläche des Handgriffs 315. Beim Anbringen des Akkupacks 100 an einer Handwerkzeugmaschine 300 wird das Verriegelungselement 210 in Eingriff mit einer nicht näher gezeigten korrespondierenden Aufnahme im Handgriff 315 der Handwerkzeugmaschine 300 gebracht.

Wie in Figur 3 zu erkennen ist, umfasst die Schnittstelle 180 außerdem Kontaktelemente 140 zur elektrischen Kontaktierung des Akkupacks 100 mit der Handwerkzeugmaschine 300 oder dem Ladegerät. Die Kontaktelemente 143 sind als Spannungskontaktelemente ausgebildet und dienen als Lade- und/oder Entladekontaktelemente. Die Kontaktelemente 144 sind als Signalkontaktelemente ausgebildet und dienen der Signalübertragung vom Akkupack 100 zu der Handwerkzeugmaschine 300 oder dem Ladegerät und/oder von der Handwerkzeugmaschine 300 oder dem Ladegerät zum Akkupack 100.

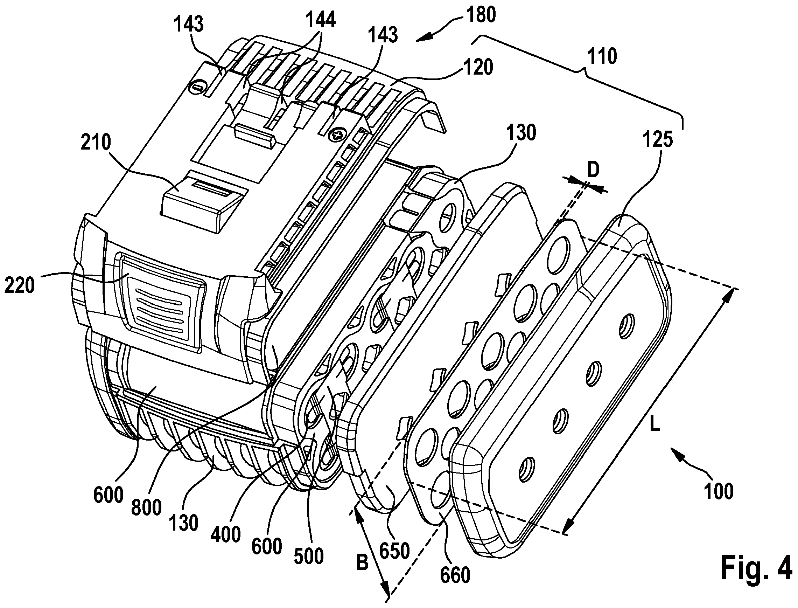

Figur 4 zeigt einen Akkupack 100 in der Explosionsdarstellung. Hier ist deutlich zu erkennen, dass das Akkupackgehäuse 110 einen Zellenhalter 600 mit einer Mehrzahl in einer Reihenschaltung verschalteter Akkuzellen 400 aufweist, wobei die zweite Gehäusekomponente 130 den Zellenhalter 600 unmittelbar ausbildet. Die Verbindung der Akkuzellen untereinander wird über Zellverbinder 500 realisiert. Ferner ist zu erkennen, dass die einzelnen Akkuzellen 400 zur mechanischen Fixierung in dem Zellenhalter 600 beabstandet voneinander aufgenommen sind. Der Zellenhalter 600 dient neben der Fixierung der Akkuzellen 400 in dem Akkupackgehäuse 120, 130 auch der Kühlung der Akkuzellen 400 und besteht aus einem wärmeleitfähigen Material, beispielsweise Aluminium oder einem Kunststoff. Des Weiteren weist der Zellenhalter 600 hülsenartige Isolierwandungen auf, so dass die einzelnen Akkuzellen 400 separiert werden und eine elektrische Isolierung der einzelnen Akkuzellen 400 voneinander gewährleistet werden kann. Der Wärmeübergangswiderstand zwischen den benachbarten Akkuzellen 400 und zwischen den Akkuzellen 400 und dem Zellenhalter 600 ist dabei möglichst gering, so dass die von den Akkuzellen 400 erzeugte Verlustwärme gut nach außen abgeführt und eine Überhitzung des Akkupacks im Inneren verhindert werden kann. An der Oberfläche des Zellenhalters 600 ist innerhalb des Ackupackgehäuses 120, 130 eine Leiterplatine einer Akkupackelektronik 800 befestigt. Ferner umfasst die Akkupackelektronik die Kontaktelemente 140 zur Herstellung der elektrischen und mechanischen Verbindung zwischen dem Akkupack 100 und der Handwerkzeugmaschine 300 bzw. zwischen dem Akkupack 100 und dem Ladegerät. Die Verbindung zwischen der Akkupackelektronik und dem Zellenhalter 600 wird durch nicht näher dargestellte Befestigungselemente gewährleistet.

In der in Figur 4 dargestellten Ausführungsform weist das Akkupackgehäuse 110 ferner zwei Seitenkomponenten 125 auf, wobei in Figur 4 lediglich eine der beiden Seitenkomponenten 125 dargestellt ist. Die Seitenkomponenten 125 halten im zusammengebauten Zustand die erste Gehäusekomponente 120 und die zweite Gehäusekomponente 130 derart zusammen, dass ein Ablösen der ersten Gehäusekomponente 120 von der zweiten Gehäusekomponente 130, oder umgekehrt, verhindert wird. Grundsätzlich von Vorteil ist, wenn der Zellenhalter 600 bereichsweise eine Außenseite der zweiten Gehäusekomponente 130 bzw. des Akkupacks 100 ausbildet, wobei alternativ der Zellenhalter 600 auch bereichsweise eine Außenseite der ersten Gehäusekomponente 120 ausbilden kann. Dabei ist es von Vorteil, wenn die Seitenkomponenten 125 aus dem gleichen Material bestehen, wie das restliche Akkupackgehäuse 110, vorzugsweise aus einem synthetisch, technisch verwendbaren thermoplastische Kunststoff wie beispielsweise einem Polyamid, besteht. Auf diese Weise können Kosten reduziert und der Montageaufwand gering gehalten werden. Alternativ können die Seitenkomponenten 125 zumindest teilweise aus einem Metall, vorzugsweise aus einem Aluminium- oder Magnesiumdruckguss bestehen, wobei in diesem Fall eine ausreichende bzw. zuverlässige Isolationseinlage, beispielsweise das elastische Element 650 zwischen den Zellverbindern 500 und den Seitenkomponenten 125 verwendet werden muss.

Ferner sind in Figur 4 Zellverbinder 500 dargestellt, durch die eine elektrische Verschaltung der Akkuzellen 400 untereinander in Parallel- und/oder Reihenschaltung vorgenommen werden kann. Dabei weist jede Akkuzelle 400 eine zu einer Längsachse x parallel verlaufende Mantelfläche 405 auf, wobei die Mantelfläche 405 von zwei senkrecht zu der Längsachse x stehenden Stirnflächen 410 begrenzt wird, an denen sich die elektrischen Pole der Akkuzellen 400 befinden. Zwischen der Stirnflächen 410 der Akkuzellen 400 und einer im Wesentlichen parallel zu der Stirnflächen 410 der Akkuzellen 400 verlaufenden Wandung des Ackupackgehäuses 110 ist eine elastische, wärmeleitende Einlage 650 angeordnet. Die elastische, wärmeleitende Einlage 650 ist derart zwischen den Akkuzellen 400 und der zweiten Gehäusekomponente 130 des Akkupackgehäuses 110 angeordnet, dass ein thermischer Kontakt mit der Stirnflächen 410 der Akkuzellen 400 entsteht und Wärme von den Akkuzellen 400 in Richtung der Wandung des Akkupackgehäuses 110 abführt wird. Die wärmeleitende Einlage 650 besteht zumindest teilweise aus einem wärmeleitenden Material, das zumindest einer der Materialgruppen der Elastomere, der thermoplastischen Elastomere oder der Kohlefasern angehört. Auf diese Weise kann gewährleistet werden, dass die wärmeleitende Einlage 650 zum einen eine Wärmeleitfähigkeit aufweist, die größer als 0,15 W/mK, bevorzugterweise größer als 0,20 W/mK, besonders bevorzugterweise zwischen 0,20 W/mK und 0,50 W/mK ist und zum anderen eine Shore-Härte aufweist, die kleiner als 50 Shore A, bevorzugterweise zwischen 20 Shore A und 45 Shore A ist.

In Figur 4 ist ferner zu erkennen, dass im Bereich der Stirnflächen 410 zwischen der elastischen wärmeleitenden Einlage 650 und der Wandung des Akkupackgehäuses 110 ein Wärmespreizelement 660 angeordnet ist. Das Wärmespreizelement 660 steht sowohl in thermischem Kontakt mit der elastischen, wärmeleitenden Einlage 650 als auch mit der Wandung des Akkupackgehäuses 110 und sorgt somit für eine gleichmäßige Beaufschlagung der Wandung des Akkupackgehäuses 110 mit Wärme. Das Wärmespreizelement 660 ist als flächenhaftes Bauteil mit einer Länge L, einer Breite B und einer Dicke D ausgeführt, wobei die Dicke D klein gegenüber der Länge L und der Breite B ist. Dabei ist das Wärmespreizelement 660 aus einem Metall, vorzugsweise aus einer Aluminium- oder Magnesiumlegierung, oder aus einem wärmeleitenden Kunststoff bestehen. Auf diese Weise kann das Wärmespreizelement 660 in einem Bereich, in dem ein Wärmeübergang erwünscht ist, diesen auch unterstützen.

In den Bereichen in denen der Wärmeübergang unerwünscht ist und möglichst weitgehend unterbunden werden soll, weist das Wärmespreizelement 660 eine Mehrzahl von Aussparungen 665 auf. Diese sind über die gesamte Fläche des Wärmespreizelementes 660 verteilt angeordnet, wobei in der dargestellten Ausführungsform für jede Akkuzelle 400 eine Aussparung 665 vorgesehen ist. Auf diese Weise kann gewährleistet werden, dass die von den Akkuzellen 400 punktuell auf das mit den Akkuzellen 400 in thermischen Kontakt stehende elastische Element 650 übertragene Verlustwärme unmittelbar an das mit dem elastische Element 650 im thermischen Kontakt stehende unmittelbar angrenzende Wärmespreizelement 660 übertragen werden kann. Das Wärmespreizelement 660 verteilt die relativ punktuell übertragene Verlustwärme aufgrund der Aussparungen 665 auf die gesamte Fläche der jeweiligen Seitenkomponenten 125 des Ackupackgehäuses 110, wobei das Wärmespreizelement 660 auch mit der jeweiligen Seitenkomponente 125 in unmittelbarem thermischen Kontakt steht.

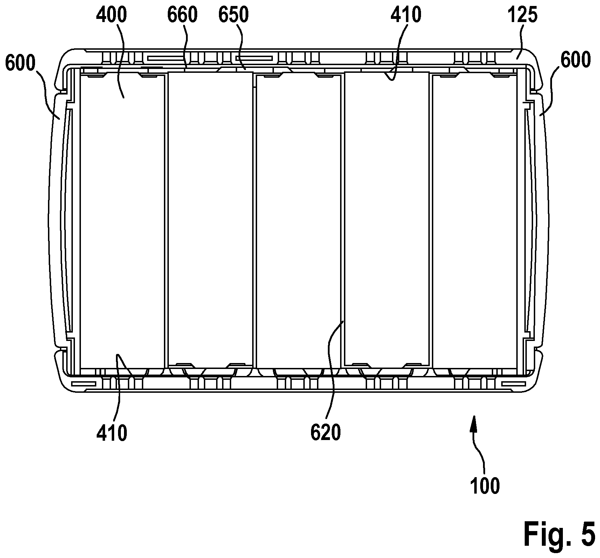

Fig. 5 stellt eine Schnittansicht des erfindungsgemäßen Akkupacks 100 dar, wobei auch hier zu erkennen ist, dass der Zellenhalter 600 die zweite Gehäusekomponente 130 und damit auch eine Außenseite des Akkupackgehäuses 110 ausbildet. Des Weiteren kann Figur 5 entnommen werden, dass sich die Mantelflächen zweier im Zellhalter 600 nebeneinander angeordneter Akkuzellen 400 nicht berühren, sondern durch die hülsenartigen Isolierwandungen mechanisch und elektrisch voneinander getrennt sind. Hier ist deutlich zu erkennen, dass die elastische, wärmeleitende Einlage 650 zwischen den Akkuzellen 400 und dem ein Wärmespreizelement 660 angeordnet ist, wobei das Wärmespreizelement 660 zwischen der elastischen, wärmeleitenden Einlage 650 und einer der Seitenkomponenten 125 des Akkupackgehäuses 110 angeordnet ist. Auf diese Weise wird gewährleistet, dass die Stirnflächen 410 der Akkuzellen 400, die elastische, wärmeleitende Einlage 650, das Wärmespreizelement 660 und die Seitenkomponente 125 in einem thermischen Kontakt stehen, so dass die Wärme von den Akkuzellen 400 in Richtung der Wandung des Akkupackgehäuses 110 abführt werden kann.

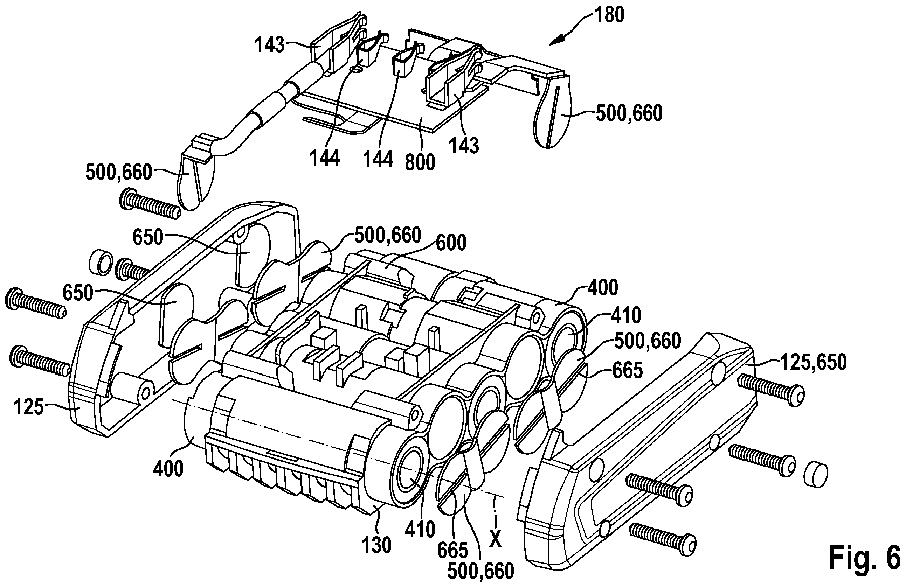

Figur 6 zeigt einen Akkupack 100 in der Explosionsdarstellung. Im Gegensatz zum Akkupack 100 aus Figur 4 sind die Zellverbinder 500 derart großflächig ausgestaltet, dass sie, neben Ihrer Funktion eine elektrische Verschaltung der Ackuzellen 400 untereinander in Parallel- und/oder Reihenschaltung zu gewährleisten, auch die Funktion des Wärmespreizelementes 660 übernehmen und den erwünschten Wärmeübergang unterstützen können. Dabei ist es von Vorteil, dass das Wärmespreizelement 660 und der Zellverbinder 500 als Verbundbauteil, insbesondere als einstückiges Verbundbauteil ausgebildet sind und in den Bereichen in denen der Wärmeübergang unerwünscht ist und möglichst weitgehend unterbunden werden soll, schlitzförmige Aussparungen 665 aufweisen, wobei für jede Akkuzelle 400 eine Aussparung 665 vorgesehen ist. Auf diese Weise kann gewährleistet werden, dass die von den Akkuzellen 400 punktuell auf die Zellverbinder 500 bzw. das Wärmespreizelement 660 übertragene Verlustwärme unmittelbar an das mit den Zellverbindern 500 in thermischen Kontakt stehende elastische Element 650 übertragen werden kann, wobei die als Wärmespreizelement 660 ausgeführten Zellverbinder 500 die relativ punktuell übertragene Verlustwärme aufgrund der Aussparungen 665 auf die gesamte Fläche verteilen und an das elastische Element 650 übertragen.

Das elastische Element 650 kann mit der jeweiligen Seitenkomponente 125 in unmittelbarem thermischen Kontakt stehen, wobei die elastische, wärmeleitende Einlage 650 , wie in Figur 6 zu erkennen ist, unmittelbar in der Seitenkomponente 125 des Akkupackgehäuses 110 angeordnet oder sogar einstückig mit diesem hergestellt ist. Wenn die Seitenkomponenten 125 aus dem gleichen Material bestehen, wie das restliche Akkupackgehäuse 110, vorzugsweise aus einem synthetisch, technisch verwendbaren thermoplastische Kunststoff, wie beispielsweise einem Polyamid, ermöglicht dies, dass die wärmeleitende Einlage 650 zusammen mit einer Seitenkomponente 125 in einem Spritzgussverfahren, beispielsweise einem 2K-Spritzgussverfahren, vorzugsweise in einem gemeinsamen Arbeitsgang und insbesondere einstückig hergestellt werden kann. Auf diese Weise können Kosten reduziert und der Montageaufwand gering gehalten werden. Es ist von Vorteil, dass die wärmeleitende Einlage 650 zumindest teilweise aus einem wärmeleitenden Material wie beispielsweise einem Elastomer oder einem thermoplastischen Elastomer besteht. Das Wärmespreizelement 660 bzw. die Zellverbinder 500 stehen somit sowohl in thermischem Kontakt mit der elastischen, wärmeleitenden Einlage 650 als auch mit der Wandung des Akkupackgehäuses 110 und sorgen somit für eine gleichmäßige Beaufschlagung der Wandung des Akkupackgehäuses 110 mit Wärme.

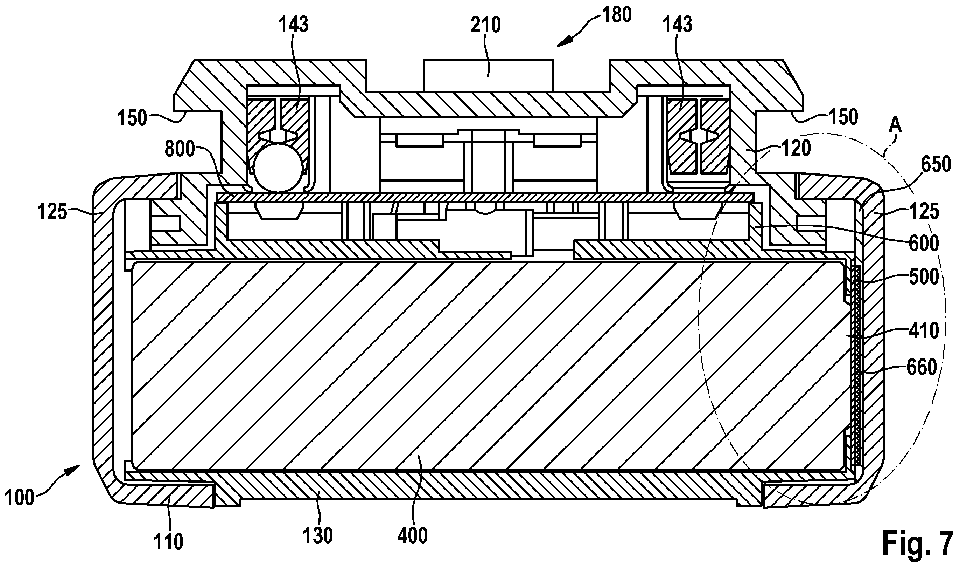

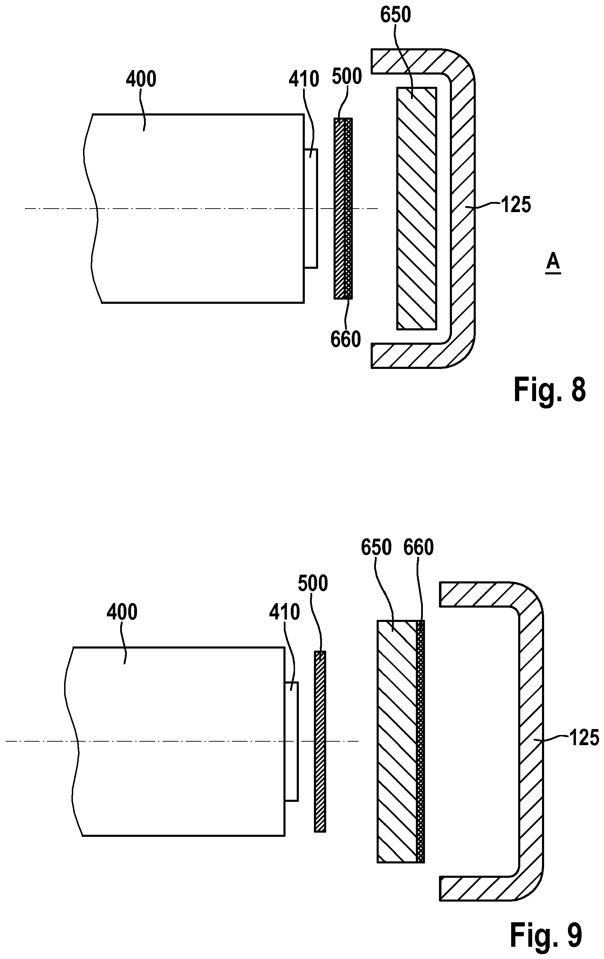

Fig. 7 stellt eine Schnittansicht des erfindungsgemäßen Akkupacks 100 aus Figur 6 dar, wobei auch hier zu erkennen ist, dass Akkupackgehäuse 110 zwei Seitenkomponenten 125 aufweist. Ferner ist hier, insbesondere aber im Detail in Figur 8, deutlich zu erkennen, dass die Zellverbinder 500 derart ausgestaltet, dass sie die Funktion des Wärmespreizelement 660 übernehmen und den erwünschten Wärmeübergang an die die elastische, wärmeleitende Einlage 650 unterstützen können. Die elastische, wärmeleitende Einlage 650 ist in den Seitenkomponenten 125 des Akkupackgehäuses 110 angeordnet oder, wie oben beschrieben zusammen mit diesen einstückig hergestellt. Auf diese Weise wird gewährleistet, dass die Stirnflächen 410 der Akkuzellen 400, das Wärmespreizelement 660, die elastische, wärmeleitende Einlage 650 und die Seitenkomponente 125 in einem thermischen Kontakt stehen, so dass die Wärme von den Akkuzellen 400 in Richtung der Wandung des Akkupackgehäuses 110 abführt werden kann.

In Fig. 9 ist eine alternative dritte Ausführungsvariante des erfindungsgemäßen Akkupacks 100 dargestellt. In dieser Ausführungsform sind die wärmeleitende Einlage 650 und das Wärmespreizelement 660 als Verbundwerkstoff, insbesondere als Folienverbundwerkstoff ausgebildet. Dabei ist es besonders vorteilhaft, wenn das Wärmespreizelement 660 als Metallfolie mit einer Dicke zwischen 0,1mm und 0,5mm; bevorzugterweise zwischen 0,01mm und 0,3mm; oder als Graphitschicht mit einer Dicke zwischen 0,1mm und 0,5mm, bevorzugterweise zwischen 0,01mm und 0,1mm die wärmeleitende Einlage 650 als elastische Folie mit einer Dicke zwischen 0,1mm und 1,4mm; bevorzugterweise zwischen 0,2mm und 1,2mm; besonders bevorzugterweise zwischen 0,3mm und 1,0mm ausgebildet sind.

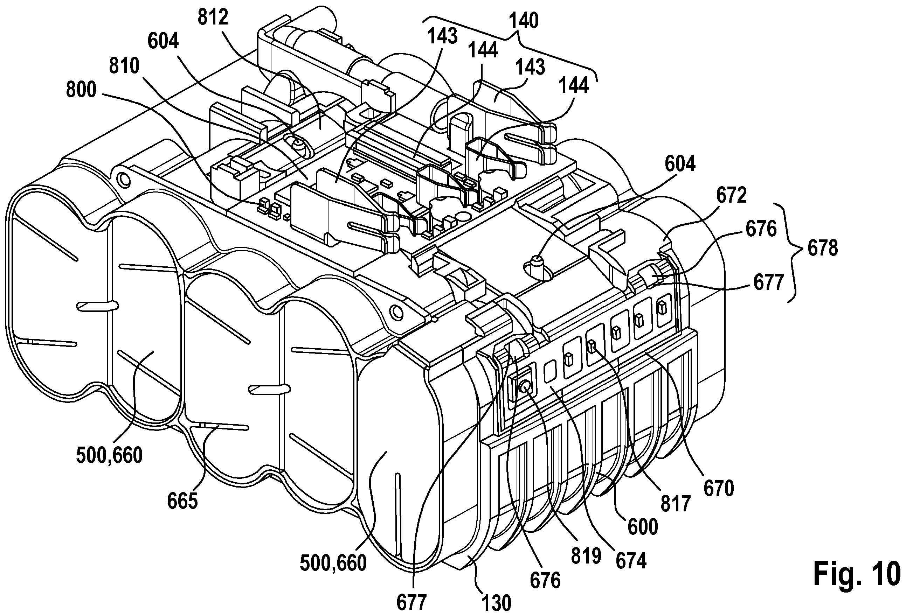

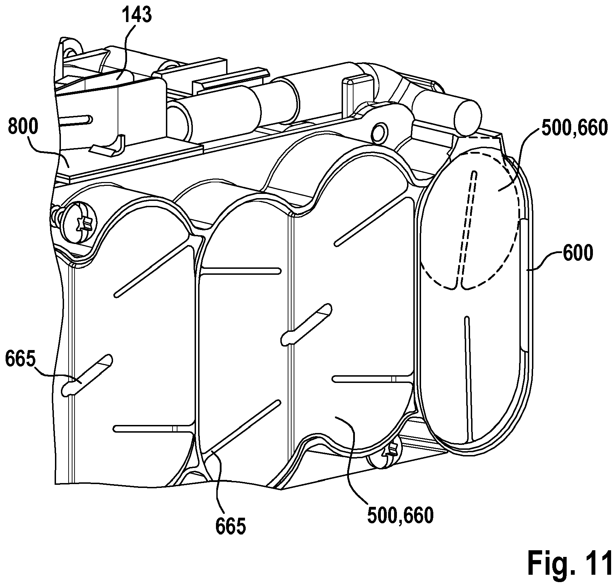

Wie in der Figur 6 ist insbesondere auch in den Figuren 10 und 11 zu erkennen, dass die Zellverbinder 500 in einer bevorzugten Ausführungsform derart großflächig ausgestaltet sind, dass sie, neben Ihrer Funktion eine elektrische Verschaltung der Akkuzellen 400 untereinander in Parallel- und/oder Reihenschaltung zu gewährleisten, auch die Funktion des Wärmespreizelementes 660 übernehmen und den erwünschten Wärmeübergang unterstützen können. Dabei ist es von Vorteil, dass ein Zellverbinder 500 wenigstens zwei Akkuzellen 400, vorzugsweise vier Akkuzellen 400, oder jede beliebige Anzahl Akkuzellen in Parallel- und/oder Serienschaltung miteinander verbindet. In den in den Figuren 6, 10 und 11 ist erkennbar, dass der Zellverbinder 500 in seiner Ausführungsform variabel gestaltet und grundsätzlich an die Ausführungsform des Zellhalters 600 bzw. an die jeweilige Anzahl der Akkuzellen 400 angepasst werden kann. In der dargestellten Ausführungsvariante sind die Zellverbinder 500 derart großflächig ausgeführt, dass die Stirnflächen 410, die über einen Zellverbinders 500 miteinander verbundenen sind, weitestgehend vollständig abgedeckt sind. Dabei bedeutet eine großflächige Ausführungsform des Zellverbinders 500, dass er, wenn er wie in den Figuren 6, 10 und 11 dargestellt zwei Akkuzellen bzw. vier Akkuzellen 400 miteinander verbindet, jeweils die Stirnflächen 410 dieser zwei Akkuzellen 400 bzw. vier Akkuzellen 400 weitestgehend abdeckt. Auf diese Weise kann gewährleistet werden, dass die eingebauten Zellverbinder 500 die Funktion des Wärmespreizelementes 660 übernehmen können, wobei alternativ das Wärmespreizelement 660 und der Zellverbinder 500 als Verbundbauteil, insbesondere als einstückiges Verbundbauteil ausgebildet sein können.

Auch bei den Figuren 6, 10 und 11 dargestellten großflächigen Zellverbindern 500 sind in Bereichen, in denen der Wärmeübergang unerwünscht ist und möglichst weitgehend unterbunden werden soll, schlitzförmige Aussparungen 665 angeordnet, so dass die von den Akkuzellen 400 punktuell auf die Zellverbinder 500 übertragene Verlustwärme unmittelbar an das mit den Zellverbindern 500 in thermischem Kontakt stehende elastische Element 650 übertragen werden kann.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Akkupack (100) für eine Handwerkzeugmaschine (300), aufweisend
einen Zellenhalter (600) und mindestens eine Akkuzelle (400), wobei der Zellenhalter (600) die mindestens eine Akkuzelle (400) aufnimmt, und wobei die Akkuzelle (400) eine zu einer Längsachse (x) parallel verlaufende Mantelfläche (405) aufweist, wobei die Mantelfläche (405) von zwei senkrecht zu der Längsachse (x) stehenden Stirnflächen (410) begrenzt wird, an denen sich die elektrischen Pole der Akkuzelle befinden;
**dadurch gekennzeichnet, dass**
zwischen wenigstens einer Stirnfläche (410) der Akkuzelle (400) und einer im Wesentlichen parallel zu der Stirnfläche (410) der Akkuzelle (400) verlaufenden Wandung des Akkupackgehäuses (110) wenigstens eine elastische, wärmeleitende Einlage (650) angeordnet ist, wobei die elastische, wärmeleitende Einlage (650) in thermischem Kontakt mit der Stirnfläche (410) der Akkuzelle (400) steht und Wärme von der Akkuzelle (400) in Richtung der Wandung des Akkupackgehäuses (110) abführt; und wobei im Bereich der wenigstens einen Stirnfläche (410) der wenigstens einen Akkuzelle (400) wenigstens ein Wärmespreizelement (660) zwischen der wenigstens einen elastischen wärmeleitenden Einlage (650) und der Wandung des Akkupackgehäuses (110) angeordnet ist, wobei das Wärmespreizelement (660) in thermischem Kontakt mit der elastischen, wärmeleitenden Einlage (650) und mit der Wandung des Akkupackgehäuses (110) steht und für eine gleichmäßige Beaufschlagung der Wandung des Akkupackgehäuses (110) mit Wärme sorgt.

2. Akkupack (100) nach einem der Ansprüche 1, **dadurch gekennzeichnet, dass** die wenigstens eine wärmeleitende Einlage (650) zumindest teilweise aus einem wärmeleitenden Material besteht, das zumindest einer der Materialgruppen der Elastomere, der thermoplastischen Elastomere oder der Kohlefasern angehört.

3. Akkupack (100) nach einem der Ansprüche 1 oder 2, **dadurch gekennzeichnet, dass** die wärmeleitende Einlage (650) eine Wärmeleitfähigkeit größer als 0,15 W/mK, bevorzugterweise größer als 0,20 W/mK, besonders bevorzugterweise zwischen 0,20 W/mK und 0,50 W/mK aufweist.

4. Akkupack (100) nach einem der Ansprüche 1 bis 3, **dadurch gekennzeichnet, dass** die wärmeleitende Einlage (650) eine Shore-Härte kleiner als 50 Shore A, bevorzugterweise zwischen 20 Shore A und 45 Shore A aufweist.

5. Akkupack (100) nach einem der Ansprüche 1 bis 4, **dadurch gekennzeichnet, dass** die wärmeleitende Einlage (650) in Form einer elastischen Folie mit einer Dicke zwischen 0,1 mm und 1,4mm; bevorzugterweise zwischen 0,2mm und 1,2mm; besonders bevorzugterweise zwischen 0,3mm und 1,0mm ausgebildet ist.

6. Akkupack (100) nach einem der Ansprüche 1 bis 5, **dadurch gekennzeichnet, dass** das Wärmespreizelement (660) zumindest teilweise aus einem Metall, vorzugsweise aus einer Aluminium- oder Magnesiumlegierung, oder zumindest teilweise aus einem wärmeleitenden Kunststoff besteht.

7. Akkupack (100) nach einem der Ansprüche 1 bis 6, **dadurch gekennzeichnet, dass** das Wärmespreizelement (660) ein flächenhaftes Bauteil mit einer Länge L, einer Breite B und einer Dicke D ist, wobei die Dicke D klein gegenüber der Länge L und der Breite B ist; und wobei das Wärmespreizelement (660) über seine Fläche verteilt eine Mehrzahl von Aussparungen (665) aufweist.

8. Akkupack (100) nach einem der Ansprüche 1 bis 7, **dadurch gekennzeichnet, dass** das Wärmespreizelement (660) in Form einer Metallfolie mit einer Dicke zwischen 0,1mm und 0,5mm; bevorzugterweise zwischen 0,01mm und 0,3mm; oder in Form einer Graphitschicht mit einer Dicke zwischen 0,1mm und 0,5mm, bevorzugterweise zwischen 0,01mm und 0,1mm ausgebildet ist.

9. Akkupack (100) nach einem der Ansprüche 1 bis 8, **dadurch gekennzeichnet, dass** die wärmeleitende Einlage (650) und das Wärmespreizelement (660) als Verbundbauteil, insbesondere als ein Folienverbundbauteil ausgebildet sind.

10. Akkupack (100) nach einem der Ansprüche 1 bis 9, **dadurch gekennzeichnet, dass** der Zellenhalter (600) zwei oder mehr Akkuzellen (400) aufnimmt, die durch zumindest einen Zellverbinder (500) in Parallel- und/oder Serienschaltung verbunden sind, wobei der zumindest eine Zellverbinder (500) zwischen einer Stirnfläche (410) der Akkuzellen (400) und der elastischen, wärmeleitenden Einlage (650) angeordnet ist.

11. Akkupack (100) nach Anspruch 10, **dadurch gekennzeichnet, dass** der zumindest eine Zellverbinder (500) wenigstens zwei oder mehr Akkuzellen (400), vorzugsweise vier Akkuzellen (400), insbesondere bevorzugt sechs Akkuzellen (400) miteinander verbindet.

12. Akkupack (100) nach Anspruch 10 oder 11, **dadurch gekennzeichnet, dass** der zumindest eine Zellverbinder (500) derart ausgeführt ist, dass der Zellverbinder (500) im Wesentlichen die Stirnflächen (410) der miteinander verbundenen Akkuzellen (400) abdeckt.

13. Akkupack (100) nach einem der Ansprüche 10 bis 12, **dadurch gekennzeichnet, dass** die elastische, wärmeleitende Einlage (650) zumindest bereichsweise in einem direkten thermischen Kontakt mit dem zumindest einen Zellverbinder (500) steht.

14. Akkupack (100) nach einem der Ansprüche 10 bis 13, **dadurch gekennzeichnet, dass** das Wärmespreizelement (660) und der zumindest eine Zellverbinder (500) als Verbundbauteil, insbesondere als einstückiges Verbundbauteil ausgebildet sind.

15. Akkupack (100) nach einem der Ansprüche 1 bis 14, **dadurch gekennzeichnet, dass** der Zellenhalter (600) zumindest bereichsweise eine Außenseite der ersten Gehäusekomponente (120) und/oder der zweiten Gehäusekomponente (130) des Akkupackgehäuse (110) bildet.

16. Akkupack (100) nach einem der Ansprüche 1 bis 15, **dadurch gekennzeichnet, dass** das Akkupackgehäuse (110) wenigstens zwei Seitenkomponenten (125) aufweist, wobei die Seitenkomponenten (125) im zusammengebauten Zustand des Akkupacks (100) die erste Gehäusekomponente (120) und die zweite Gehäusekomponente (130) derart zusammen halten, dass ein Ablösen der ersten Gehäusekomponente (120) von der zweiten Gehäusekomponente (130), oder umgekehrt, verhindert wird.

17. Akkupack (100) nach Anspruch 16, **dadurch gekennzeichnet, dass** die Seitenkomponenten (125) zumindest teilweise aus einem Metall, vorzugsweise aus einem Aluminium- oder Magnesiumdruckguss bestehen.

18. Handwerkzeugmaschine (300) mit einem Elektromotor sowie einem lösbar mit der Handwerkzeugmaschine (300) verbindbaren Akkupack (100) nach einem der vorangegangenen Ansprüche.

## Claims

1. Rechargeable battery pack (100) for a handheld power tool (300), having
a cell holder (600) and at least one rechargeable battery cell (400), wherein the cell holder (600) receives the at least one rechargeable battery cell (400), and wherein the rechargeable battery cell (400) has a lateral surface (405) which runs parallel to a longitudinal axis (x), wherein the lateral surface (405) is delimited by two end faces (410) which are perpendicular to the longitudinal axis (x) and at which the electrical poles of the rechargeable battery cell are located;
**characterized in that**
at least one elastic, thermally conductive insert (650) is arranged between at least one end face (410) of the rechargeable battery cell (400) and a wall of the rechargeable battery pack housing (110) which runs substantially parallel to the end face (410) of the rechargeable battery cell (400), wherein the elastic, thermally conductive insert (650) is in thermal contact with the end face (410) of the rechargeable battery cell (400) and dissipates heat from the rechargeable battery cell (400) in the direction of the wall of the rechargeable battery pack housing (110); and wherein at least one heat-spreading element (660) is arranged between the at least one elastic thermally conductive insert (650) and the wall of the rechargeable battery pack housing (110) in the region of the at least one end face (410) of the at least one rechargeable battery cell (400), wherein the heat-spreading element (660) is in thermal contact with the elastic, thermally conductive insert (650) and with the wall of the rechargeable battery pack housing (110) and ensures heat is uniformly applied to the wall of the rechargeable battery pack housing (110).

2. Rechargeable battery pack (100) according to one of Claims 1, **characterized in that** the at least one thermally conductive insert (650) is at least partially composed of a thermally conductive material which belongs to at least one of the material groups comprising elastomers, thermoplastic elastomers or carbon fibres.

3. Rechargeable battery pack (100) according to either of Claims 1 and 2, **characterized in that** the thermally conductive insert (650) has a thermal conductivity of greater than 0.15 W/mK, preferably of greater than 0.20 W/mK, particularly preferably of between 0.20 W/mK and 0.50 W/mK.

4. Rechargeable battery pack (100) according to one of Claims 1 to 3, **characterized in that** the thermally conductive insert (650) has a Shore hardness of less than 50 Shore A, preferably of between 20 Shore A and 45 Shore A.

5. Rechargeable battery pack (100) according to one of Claims 1 to 4, **characterized in that** the thermally conductive insert (650) is designed in the form of an elastic film with a thickness of between 0.1 mm and 1.4 mm; preferably of between 0.2 mm and 1.2 mm; particularly preferably of between 0.3 mm and 1.0 mm.

6. Rechargeable battery pack (100) according to one of Claims 1 to 5, **characterized in that** the heat-spreading element (660) is at least partially composed of a metal, preferably of an aluminium or magnesium alloy, or at least partially of a thermally conductive plastic.

7. Rechargeable battery pack (100) according to one of Claims 1 to 6, **characterized in that** the heat-spreading element (660) is a planar component with a length L, a width B and a thickness D, wherein the thickness D is small in comparison to the length L and the width B; and wherein the heat-spreading element (660) has a plurality of cutouts (665) distributed over its surface area.

8. Rechargeable battery pack (100) according to one of Claims 1 to 7, **characterized in that** the heat-spreading element (660) is designed in the form of a metal foil with a thickness of between 0.1 mm and 0.5 mm; preferably of between 0.01 mm and 0.3 mm; or in the form of a graphite layer with a thickness of between 0.1 mm and 0.5 mm, preferably of between 0.01 mm and 0.1 mm.

9. Rechargeable battery pack (100) according to one of Claims 1 to 8, **characterized in that** the thermally conductive insert (650) and the heat-spreading element (660) are designed as a composite component, in particular as a composite film/foil component.

10. Rechargeable battery pack (100) according to one of Claims 1 to 9, **characterized in that** the cell holder (600) receives two or more rechargeable battery cells (400) which are connected in parallel and/or series by at least one cell connector (500), wherein the at least one cell connector (500) is arranged between an end face (410) of the rechargeable battery cells (400) and the elastic, thermally conductive insert (650).

11. Rechargeable battery pack (100) according to Claim 10, **characterized in that** the at least one cell connector (500) connects at least two or more rechargeable battery cells (400), preferably four rechargeable battery cells (400), particularly preferably six rechargeable battery cells (400), to one another.

12. Rechargeable battery pack (100) according to Claim 10 or 11, **characterized in that** the at least one cell connector (500) is embodied in such a way that the cell connector (500) substantially covers the end faces (410) of the rechargeable battery cells (400) which are connected to one another.

13. Rechargeable battery pack (100) according to one of Claims 10 to 12, **characterized in that** the elastic, thermally conductive insert (650) is in direct thermal contact with the at least one cell connector (500) at least in regions.

14. Rechargeable battery pack (100) according to one of Claims 10 to 13, **characterized in that** the heat-spreading element (660) and the at least one cell connector (500) are designed as a composite component, in particular as an integral composite component.

15. Rechargeable battery pack (100) according to one of Claims 1 to 14, **characterized in that** the cell holder (600) forms an outer side of the firsts housing component (120) and/or of the second housing component (130) of the rechargeable battery pack housing (110) at least in regions.

16. Rechargeable battery pack (100) according to one of Claims 1 to 15, **characterized in that** the rechargeable battery pack housing (110) has at least two side components (125), wherein the side components (125), in the assembled state of the rechargeable battery pack (100), hold the first housing component (120) and the second housing component (130) together in such a way that the removal of the first housing component (120) from the second housing component (130), or vice versa, is prevented.

17. Rechargeable battery pack (100) according to Claim 16, **characterized in that** the side components (125) are at least partially composed of a metal, preferably of an aluminium or magnesium diecasting.

18. Handheld power tool (300) comprising an electric motor and also a rechargeable battery pack (100) according to one of the preceding claims which can be detachably connected to the handheld power tool (300).

## Revendications

1. Batterie (100) destinée à une machine-outil à main (300), la batterie comprenant
un support d'élément (600) et au moins un élément de batterie (400), le support d'élément (600) recevant l'au moins un élément de batterie (400), l'élément de batterie (400) présentant une surface latérale (405) s'étendant parallèlement à un axe longitudinal (x), la surface latérale (405) étant délimitée par deux faces d'extrémité (410), perpendiculaires à l'axe longitudinal (x), au niveau desquelles se trouvent les pôles électriques de l'élément de batterie ; **caractérisée en ce que**
au moins un insert thermoconducteur élastique (650) est disposé entre au moins une face d'extrémité (410) de l'élément de batterie (400) et une paroi du boîtier de batterie (110), l'insert thermoconducteur élastique (650) étant en contact thermique avec la face d'extrémité (410) de l'élément de batterie (400) et de la chaleur étant dissipée par l'élément de batterie (400) en direction de la paroi du boîtier de batterie (110) ; et au moins un élément de dissipation de chaleur (660) situé entre l'au moins un insert thermoconducteur élastique (650) et la paroi du boîtier de batterie (110) étant disposé dans la région de l'au moins une face d'extrémité (410) de l'au moins un élément de batterie (400), l'élément de dissipation de chaleur (660) étant en contact thermique avec l'insert thermoconducteur élastique (650) et avec la paroi du boîtier de batterie (110) et servant à soumettre uniformément la paroi du boîtier de batterie (110) à de la chaleur.

2. Batterie (100) selon l'une des revendications 1, **caractérisée en ce que** l'au moins un insert thermoconducteur (650) comprend au moins en partie un matériau thermoconducteur qui appartient à au moins un des groupes de matériaux élastomères, élastomères thermoplastiques ou fibres de carbone.

3. Batterie (100) selon l'une des revendications 1 ou 2, **caractérisée en ce que** l'insert thermoconducteur (650) a une conductivité thermique supérieure à 0,15 W/mK, de préférence supérieure à 0,20 W/mK, de manière particulièrement préférée entre 0,20 W/mK et 0,50 W/mK.

4. Batterie (100) selon l'une des revendications 1 à 3, **caractérisée en ce que** l'insert thermoconducteur (650) a une dureté Shore inférieure à 50 Shore A, de préférence comprise entre 20 Shore A et 45 Shore A.

5. Batterie (100) selon l'une des revendications 1 à 4, **caractérisée en ce que** l'insert thermoconducteur (650) est conçue sous la forme d'un fil élastique ayant une épaisseur comprise entre 0,1 mm et 1,4 mm ; de préférence entre 0,2 mm et 1,2 mm ; de manière particulièrement préférée entre 0,3 mm et 1,0 mm.

6. Batterie (100) selon l'une des revendications 1 à 5, **caractérisée en ce que** l'élément de dissipation de chaleur (660) est au moins partiellement en métal, de préférence en alliage d'aluminium ou de magnésium, ou au moins partiellement en matière plastique thermoconductrice.

7. Batterie (100) selon l'une des revendications 1 à 6, **caractérisée en ce que** l'élément de dissipation de chaleur (660) est un composant plan ayant une longueur L, une largeur B et une épaisseur D, l'épaisseur D étant petite par rapport à la longueur L et à la largeur B ; et l'élément de dissipation de chaleur (660) comportant une pluralité d'évidements (665) répartis sur sa surface.

8. Batterie (100) selon l'une des revendications 1 à 7, **caractérisée en ce que** l'élément de dissipation de chaleur (660) est conçue sous la forme d'un film métallique ayant une épaisseur comprise entre 0,1 mm et 0,5 mm ; de préférence entre 0,01 mm et 0,3 mm ; ou sous la forme d'une couche de graphite ayant une épaisseur comprise entre 0,1 mm et 0,5 mm, de préférence entre 0,01 mm et 0,1 mm.

9. Batterie (100) selon l'une des revendications 1 à 8, **caractérisée en ce que** l'insert thermoconducteur (650) et l'élément de dissipation de chaleur (660) est conçu comme un composant composite, en particulier comme un composant composite en film.

10. Batterie (100) selon l'une des revendications 1 à 9, **caractérisée en ce que** le support d'élément (600) reçoit au moins deux éléments de batterie (400) qui sont reliés en parallèle et/ou en série par au moins un moyen de liaison d'éléments (500), l'au moins un moyen de liaison d'éléments (500) étant disposé entre une face d'extrémité (410) des éléments de batterie (400) et l'insert thermoconducteur élastique (650).

11. Batterie (100) selon la revendication 10, **caractérisée en ce qu'**au moins un moyen de liaison d'éléments (500) relie entre eux au moins deux éléments de batterie (400), de préférence quatre éléments de batterie (400), de manière particulièrement préférée six éléments de batterie (400).

12. Batterie (100) selon la revendication 10 ou 11, **caractérisée en ce que** l'au moins un moyen de liaison d'éléments (500) est conçu de telle sorte que le moyen de liaison d'éléments (500) recouvre sensiblement les faces d'extrémité (410) des éléments de batterie (400) reliés entre eux.

13. Batterie (100) selon l'une des revendications 10 à 12, **caractérisée en ce que** l'insert thermoconducteur élastique (650) est au moins partiellement en contact thermique direct avec l'au moins un moyen de liaison d'éléments (500).

14. Batterie (100) selon l'une des revendications 10 à 13, **caractérisée en ce que** l'élément de dissipation de chaleur (660) et l'au moins un moyen de liaison d'éléments (500) sont conçus comme un composant composite, en particulier un composant composite monobloc.

15. Batterie (100) selon l'une des revendications 1 à 14, **caractérisée en ce que** le support d'élément (600) forme au moins par endroits un côté extérieur du premier composant de boîtier (120) et/ou du deuxième composant de boîtier (130) du boîtier de batterie (110).

16. Batterie (100) selon l'une des revendications 1 à 15, **caractérisée en ce que** le boîtier de batterie (110) comporte au moins deux composants latéraux (125), les composants latéraux (125) maintenant ensemble le premier composant de boîtier (120) et le deuxième composant de boîtier (130) lorsque la batterie (100) est assemblée de manière à empêcher le premier composant de boîtier (120) de se désolidariser du deuxième composant de boîtier (130), ou inversement.

17. Batterie (100) selon la revendication 16, **caractérisée en ce que** les composants latéraux (125) sont au moins partiellement en métal, de préférence en aluminium ou en magnésium coulé sous pression.

18. Machine-outil à main (300) comprenant un moteur électrique et une batterie (100) selon l'une des revendications précédentes pouvant être reliée de manière amovible à la machine-outil à main (300).
